# EUROPEAN PATENT APPLICATION

(11) **EP 2 693 783 A1**
(43) Date of publication of application: **05.02.2014**
(21) Application number: 12179040.6
(22) Date of filing: 02.08.2012
(51) Int. Cl.: H04W 8/18, H04W 8/26

(54) **SIM activation utilizing an activation gateway**

(71) Applicant: Comptel Corporation, 00180 Helsinki (FI)
(72) Inventor: Isomäki, Simo, Vantaa 01260 (FI); Haukkovaara, Jukka, Jorvas 02420 (FI)
(74) Representative: Tiilikainen, Jarkko Tapio

(57) **Abstract**

The purpose of the invention is to enable the SIM user to select service package for the SIM to the PLMN by providing means for assigning the service package for the SIM to the PLMN based on SIM card activation dialogue between the operator and the user end. The invention is based on utilizing SIM service applet offering user selectable service alternatives to be assigned for the SIM user to the telecommunications network.

## Description

### Technical Field

The present invention relates to a method, according to the preamble of Claim 1. The invention also relates to subscriber identity module according to the preamble of Claim 6. Further, the invention relates to activation gateway for mobile communications network according to the preamble of Claim 11.

### Background Art

Patent application publication US 2009/0149175 Al discloses tools and techniques for activating a wireless device on a wireless network. In an aspect such tools can allow an unactivated wireless device that is a wireless device that generally would be inoperable on a wireless network to be given limited functionality in order to activate itself on the network. In some cases, such tools can be implemented within business processes to generate revenue streams for entities involved in the wireless activation processes.

In the disclosed method, a SIM is assigned a temporary IMSI number, which is part of a pool of known temporary IMSI numbers. A specialized detection device is provided in the wireless network, and the network is configured to recognize the detection device as the HLR for each IMSI number in the pool of known temporary IMSI numbers. Hence, when the device attempts to register on the network, the network will query the detection device for data pertaining to the phone.

Patent application publication US 2010/0210305 Al discloses a method of activating a SIM card using an ODA (On Demand Activation) application, comprising a computer and an associated ODA database, for activating SIM card in a mobile network. In the arrangement according to the document, the ODA database contains SIM card information related to the cards that shall be activated in that when a SIM card is inserted into a mobile equipment, such as a mobile telephone, and the mobile equipment is switched on, the ODA is connected to the SIM card for updating the SIM card with a card definition file, in that the ODA is arranged to be connected to a HLR/AUC in order to transfer information stored on said updated SIM card, and in that the HLR/AUC is arranged to set up a subscription for the SIM card.

Essential in the method is that the ODA 2 is connected to a proxy, such as an SS7 SCCP Application logically located between a HLR/AUC and a MSC/VLR (Mobile Services Switching Centre/Visitor Location Register). Further, the memory of the SIM cards contains a code which, when a SIM card is inserted into a mobile equipment and the mobile equipment is switched on, a message is received by the Proxy, which Proxy is arranged to direct a message, containing said code, from the mobile phone via said MSC/VLR to said ODA application. According to a very much preferred embodiment of the document, said code is a temporary IMSI (IMSI-T). However, the code for directing the signal to the Proxy could be another special code than IMSI-T.

Both US 2009/0149175 Al and US 2010/0210305 Al rely on the use of temporary IMSIs and additional elements, such as a detection device or a proxy, configured in the telecommunications network.

### Disclosure of Invention

It is an object of the invention to create a completely new technique for activating a SIM on a mobile communications network.

According to an aspect of the invention, the SIM is provided with an IMSI, which is stored in a HLR. When the SIM is first connected to the mobile communications network, an activation applet is executed which communicates with an activation gateway. The activation gateway allocates a temporary MSISDN to the SIM and communicates with the activation applet for receiving a user selection with regard to at least one selectable parameter, such as a MSISDN or a service package. Then, if the user selection contains the selection of a MSISDN, the activation gateway sends instructions to the HLR for recording the selected MSISDN in place of the temporary MSISDN. If the user selection contains the selection of a service package, the activation gateway sends instructions to the HLR and the SIM for recording the necessary parameters associated with the selected service package.

According to another aspect of the invention, an activation gateway for activating a SIM on a mobile communications network is provided. The activation gateway is configured to receive a notification from an activation applet that the activation applet with regard to a SIM 20) having an IMSI is executed. Responsive to the received notification, the activation gateway allocates a temporary MSISDN to the SIM and sending instructions to a HLR for storing the temporary MSISDN logically connected to the IMSI. Then, a list of selectable alternatives is constructed and communicated to the activation applet. In response, a user selection selecting a MSISDN and/or a service package is received from the activation applet. Then, if the user selection contains the selection of a MSISDN, instructions are sent to the HLR for recording the selected MSISDN in place of the temporary MSISDN. If the user selection contains the selection of a service package, corresponding instructions are sent to the HLR and the SIM.

According to further aspect of the invention, an activation applet is provided that can be executed on a mobile wireless device for activating a SIM on the mobile communications network. The activation applet contains program code instructing the mobile wireless device to communicate with an activation gateway to notify the activation gateway of the execution of the activation applet and to receive a list of selectable alternatives with regard to at least one selectable parameter, such as a MSISDN or a service package. The activation applet is also configured to obtain a user selection from the user of the mobile terminal with respect to at least one of the selectable parameters. Further, the activation applet communicates the obtained user selection to the activation gateway and receives appropriate confirmation from the activation gateway and stores the confirmed parameters in the memory of the SIM.

According to an even further aspect of the invention, there is provided a SIM comprising an IMSI and the activation applet described above.

Thus, the invention creates a completely new technique for activating a SIM on a mobile communications network.

The invention also has several embodiments that provide various benefits over the above-cited background art.

For instance, there are embodiments that allow placing the activation gateway outside the basic telecommunications network, whereby there is no need for additional elements, such as detection devices or proxies, to be configured in the telecommunications network configured. Then, the telecommunications network itself can better operate according to standard procedures.

There are also embodiments that allow the use, and reuse, of temporary MSISDNs and thereby reducing the resources that need to be reserved for the non-activated SIMs in the telecommunications network.

Also other considerable advantages can be gained with aid of the embodiments of the invention. For example, the service setting for the SIM user does not need to be predefined, but it can be defined by offering a selectable service setting to the SIM user. This means that the services provided for the SIM can be assigned based on the user selection received from the SIM user interface.

### Brief Description of Drawings

Embodiments of the invention are presented in more detail below with reference to the following drawings:
Fig. 1 is an operational diagram presenting a system and a method according to an embodiment in the PLMN network environment.
Fig. 2 presents a signalling diagram according to an embodiment.
Fig. 3 presents examples of use of an embodiment.
Fig. 4 presents logic for a dynamic number allocation element according to an embodiment.

### Modes for Carrying Out the Invention

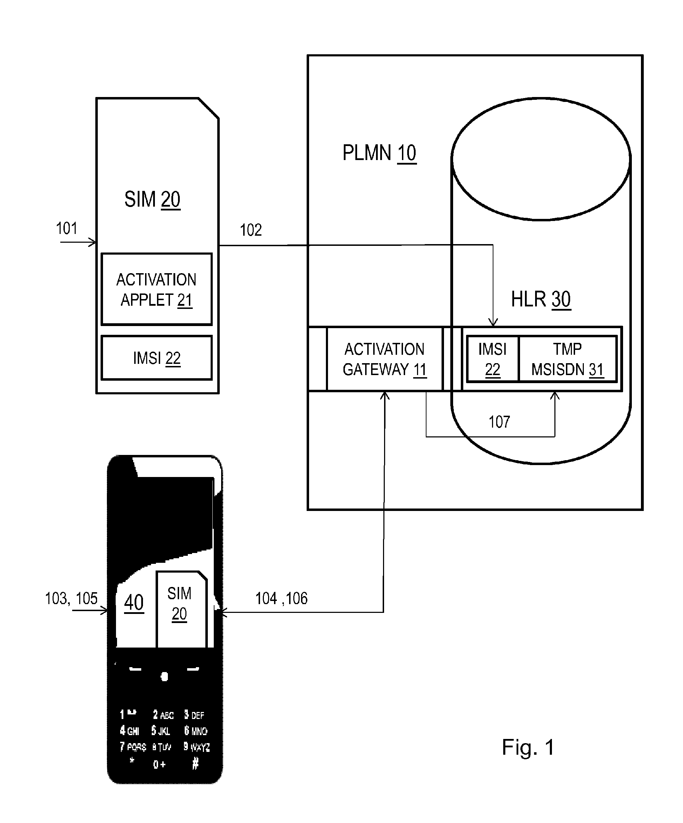

Fig. 1 presents components and elements used in an embodiment. The system of Fig. 1 includes a PLMN 10, which is Public Land Mobile Network such as a UMTS-GSM (Universal Mobile Telecommunications System - Global System for Mobile Communications) family network. Fig. 1 also shows a SIM card 20 (Subscriber Identity Module) assigned to identify a PLMN (Public Land Mobile Network) user. Fig. 1 also shows an HLR 30 (Home Location Register) assigned to have data individualizing the PLMN user's under that specific HLR's 30 responsibility. Fig. 1 also shows a MUT 40, which is a Mobile User Terminal adapted to offer a user interface for the SIM card 20. Together with the SIM card 20, the MUT 40 forms the user end 20, 40.

As shown in Fig. 1, the PLMN 10 includes an Activation Gateway 11 adapted to intermediate the method according to an embodiment between the user end 20, 40 and the HLR 30. In another embodiment, the Activation Gateway 11 is not part of the PLMN 10 but in communication with the PLMN 10. The SIM 20 includes an activation applet 21 and an IMSI 22 (International Mobile Subscription Identity). The HLR 30 includes the same IMSI 22, which can be related to a temporary MSISDN number 31. The MUT 40 includes the SIM 20 or a slot for the SIM 20.

The method of activating a SIM on a mobile communications network according to the Fig. 1 includes the following steps:
101) The SIM 20 is provided with the activation applet 21 and the IMSI 22 stored in the memory of the SIM 20.
102) The IMSI 22 is stored in the HLR 30.
103) The user mobile terminal 40 is provided with the SIM 20.
104) When the SIM 20 is, before completed execution of the activation applet 21, connected to the mobile communications network, the activation applet 21 communicates with the activation gateway 11 and, in response to this communication, the activation gateway 11 allocates a temporary MSISDN 31 to the SIM. The activation gateway 11 also sends instructions to the HLR 30 for storing the temporary MSISDN 31 in the HLR 30, wherein the temporary MSISDN 31 is logically connected to the IMSI 22. The activation applet 21 also receives a list of selectable alternatives with regard to at least one selectable parameter. Herein, the at least one selectable parameter includes at least one of an MSISDN and a service package, each of which service packages defines a respective list of services the user of the service package has access to.
105) The activation applet obtains a user selection from the user of the mobile terminal, which user selection selects at least one of the selectable alternatives with respect to at least one of the selectable parameters.
106) The activation applet 21 communicates the obtained user selection to the activation gateway 11.
107) When the user selection contains the selection of an MSISDN, the activation gateway sends instructions to the HLR for recording the selected MSISDN in place of the temporary MSISDN; and when the user selection contains the selection of a service package, the activation gateway sends instructions to the HLR and the SIM for recording the list of services associated with the selected service package respectively in the HLR and in the SIM.

Thus, in an embodiment, the method can include:
- storing temporary MSISDN 31 for the SIM on the PLMN HLR in order to make it recognizable by the activation gateway,
- if the user selection contains selection of MSISDN, replacing the temporary MSISDN with the user selected MSISDN on PLMN HLR for the SIM,
- if user selection does not contain selection of MSISDN, replacing the temporary MSISDN with automatically selected MSISDN on PLMN HLR for the SIM, and/or
- complementing PLMN HLR subscriber identity module provisional information on the gateway in response to requirements of the received user selection during the activation process.

According to an embodiment, the SIM 20 is authenticated and authorized with the HLR before the communication 104 between the activation applet 21 and the activation gateway 11.

According to an embodiment, the authorizing of the SIM is performed according to the GSM standard.

According to an embodiment, the activation applet 21 communicates 104 with the activation gateway 11 by means of USSD requests and/or SMS messages.

According to an embodiment, the IMSI 22 remains the same during the activation process. Thus, this embodiment does not need any temporary IMSIs.

According to an embodiment, the activation applet 21 is disabled after completion of the activation process.

According to an embodiment, the activation applet 21 is a program code storable to the SIM during the factory personalisation.

According to an embodiment, the activation applet 21 is stored in the memory of the SIM before the SIM is released on the marker.

According to an embodiment, the at least one selectable parameter further includes the language 311, 321, 331 and the list of selectable alternatives includes the languages that are available for selection.

According to an embodiment, the at least one selectable parameter further includes the subscription type and the list of selectable alternatives includes prepaid and postpaid.

According to an embodiment, the at least one selectable parameter includes the service package and the list of selectable alternatives includes the service packages that are available for selection. In this embodiment, the service packages include definitions at least with respect to the SMS services and call connection services.

According to an embodiment, the at least one selectable parameter includes the MSISDN and the list of selectable alternatives includes a plurality of different MSISDNs available for selection as the MSISDN to be recorded in place of the temporary MSISDN in the HLR 30.

According to an embodiment, the SIM card 20 of Fig. 1 comprises the IMSI 22 and the activation applet 21 stored in the memory of the SIM. The activation applet 21 comprises program code for causing the terminal device to perform the steps of:
- communicating 104 with the activation gateway 11 to notify the activation gateway 11 of the execution of the activation applet 21 and for receiving a list of selectable alternatives with regard to at least one selectable parameter when the SIM is before completed execution of the activation applet 21 connected to the mobile communications network, the at least one selectable parameter including at least one of a MSISDN and a service package, each of the service packages defining a respective list of services the user of the service package has access to;
- obtaining 105 a user selection from a user of the mobile terminal, the user selection selecting at least one of the selectable alternatives with respect to at least one of the selectable parameters;
- communicating 106 the obtained user selection to the activation gateway 11; and
- if the user selection contains the selection of a service package, receiving instructions from the activation gateway 11 and responsive to the instructions recording the list of services associated with the selected service package in the memory of the SIM 20.

According to an embodiment, at least one of the following selection possibilities can be provided to the user:
a. the user is prompted to select language after she/he has put the SIM card to the telecommunications device and powered on the device,
b. the user is prompted to select payment options, such as between postpaid and prepaid,
c. the user is prompted to select between different payment packages of payment options,
d. the user is prompted to select one of the offered SMS service packages, and
e. the user is prompted to select possible additional services.

In response, the embodiment can receive at least one of the following selections from the user interface:
a. language choice,
b. payment option (postpaid or prepaid),
c. payment package,
d. SMS service package, and
e. possible additional services.

The activation applet or the gateway can also provide MSISDN selection to the user interface and it can receive MSISDN choice from the user end.

According to an embodiment, the activation gateway 11 of Fig. 1 is configured to perform the steps of:
- receiving communication 104 from an activation applet 21 to notify the activation gateway 11 of the execution of the activation applet 21 with regard to a SIM 20 having an IMSI 22;
- responsive to the received notification, allocating a temporary MSISDN 31 to the SIM and sending instructions to a PLMN HLR 30 for storing the temporary MSISDN 31 logically connected to the IMSI 22;
- constructing a list of selectable alternatives with regard to at least one selectable parameter, the at least one selectable parameter including at least one of a MSISDN and a service package, each of the service packages defining a respective list of services the user of the service package has access to;
- receiving 105 from the activation applet 21 a user selection selecting at least one of the selectable alternatives with respect to at least one of the selectable parameters;
- when the user selection contains the selection of a MSISDN, sending (107) instructions to the HLR (30) for recording the selected MSISDN in place of the temporary MSISDN; and
- when the user selection contains the selection of a service package, sending (107) instructions to the HLR (30) and the SIM (20) for recording the list of services associated with the selected service package respectively in the HLR (30) and in the SIM (20).

The gateway can also be configured to store temporary MSISDN 31 for the SIM on the gateway in order to make it recognizable by the activation gateway. If the user selection contains selection of MSISDN, the gateway replaces the temporary MSISDN with the user selected MSISDN for the SIM. In addition, the gateway sends a command to the PLMN HLR to update its data accordingly.

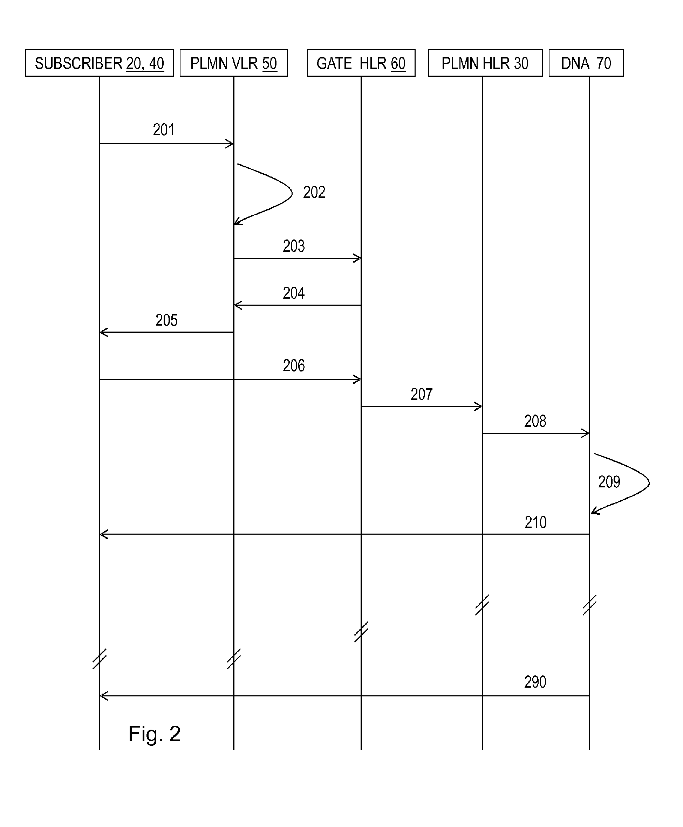

Fig. 2 shows one practical way to do signalling in a wider network environment according to an embodiment.

The signalling diagram of Fig. 2 includes, in addition to the elements presented in the example of Fig. 1, also a VLR 50, a Gate HLR 60 and a DNA 70. The VLR 50 is a PLMN 10 visitor location register 50. The Gate HLR 60 is a Home Location Register in an activation gateway 11 according to an embodiment. The DNA 70 is a dynamic number allocation element in the activation gateway 11 according to an embodiment.

In the beginning of the method, the SIM 20 is installed to the MUT 40. The steps 201 - 205 are implemented in order to activate the user end 20, 40 to the PLMN network 10.
201) Communication for MUT 40 activation is received from the MUT 40 user interface.
202) VLR 50 locates the HLR 30 with IMSI 22.
203) VLR 50 makes a location update with HLR 30.
204) HLR 30 accepts the update.
205) MUT 40 is allowed to attach.

The steps 206 - 290 are implemented in order to communicate and assign services for the user end 20, 40 in the PLMN 10.
206) USSD request or SMS.
207) USSD request or SMS.
208) Communication starts with DNA.
209) DNA checks that IMSI is valid.
210) DNA returns first page of dialog to the MUT 40.

Potential dialog steps from 210 before 290 are gone through to dialogue with the end user to select a number package and services through series of dialog pages to which user does selections. The dialog can also be reset partially by the user returning to previous pages, similar to HTML/web browser based dialog's with links to next pages. The dialog step 290 is implemented in order to end the dialog.
290) DNA returns the last page of the dialog.

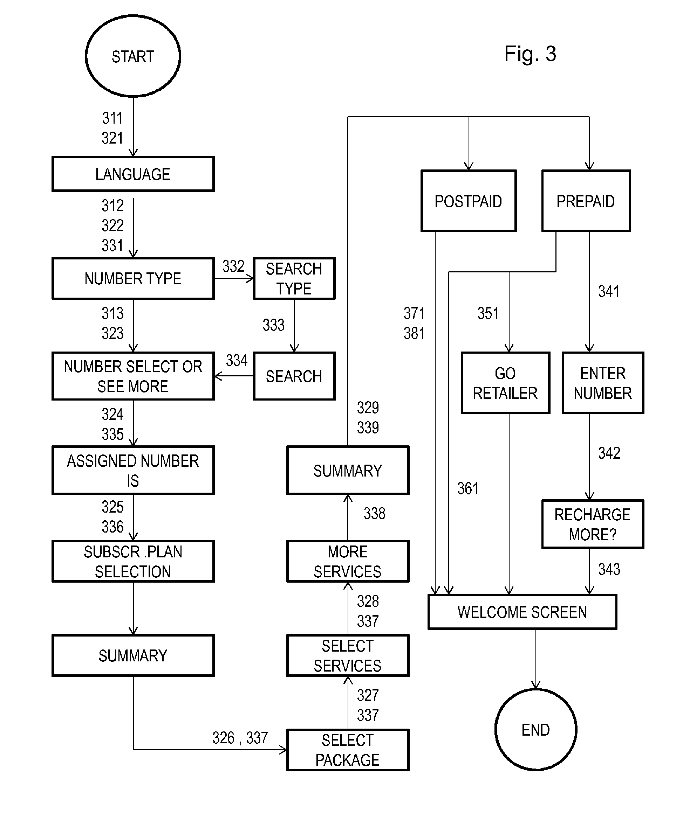

Fig. 3 presents examples of using the services that can be provided by an embodiment. The first example starting from the step 311 is provided for enabling a user to select the language for the telecommunications device or service.
311) A language selection menu is presented to the user after she/he has inserted the SIM card into the telecommunications device and switched the power on.
312) A selection between a configurable number of languages, for example three (3) comprising English, Arabic and Hindi is received from the device's user interface...
313) ... as well as a selection to go forward in the menus.

The second example starts from step 323 (optionally from step 321). This example enables the user to select an MSISDN number, for example a special "gold" number.
321) A language selection step corresponding to step 311 is optionally performed first.
322) An optional step 322 corresponds to step 312.
323) A number selection option is presented to the user and a number request for a "gold" number is received from the user interface. In response to the request, a number proposal list is presented to the user interface.
324) The selection related to a number in the number proposal list is received from the user interface. In response to the selection, a confirmation of the selected number is shown to the user interface.

After the above steps, the user has selected the MSISDN for her/his subscription. The method of the example continues with the following optional steps:
325) The selection of prepaid or postpaid is received from the user interface. In response, a summary showing user's MSISDN number and subscription plan is shown via the user interface.
326) The selection related to user's choice for his service package, for example "Pre-1" is received from the user interface.
327) The selection related to user's choice for SMS services for his package is received from the user interface.
328) The selection relating to possible additional services is received from the user interface and in response a summary showing the selected package and services is shown via the user interface.
329) The selection to go forward to payment menus is received from the user interface.

The third example starts from step 331 and shows how the user can be enabled to search for a preferred number and add multiple services.
331) A language selection menu is shown to the user after she/he has inserted the SIM card into the telecommunications device and switched the power on. The selection between languages, for example English and Arabic is received via the user interface of the device.
332) The selection "search number" is received from the user interface. In response, a menu allowing selecting between first, last or pattern numbers is shown via the user interface.
333) The selections "last digits" and "444" are received from the user interface and in response a list of matching numbers is sent to the user interface.
334) A request to see more numbers is received from the user interface. In response, more potential numbers are searched and shown.
335) The selection of a number from the suggested numbers list is received from the user interface and the selected number is assigned for the SIM card in the telecommunications network, and a confirmation about the number is shown via the user interface.
336) The selection of the Prepaid subscription plan (from a list of Prepaid or Postpaid) is received from the user interface. In response to the selection, a summary showing the subscription's MSISDN number and the selected subscription plan is shown via the user interface.
337) Various selections are received via the user interface. The selections can include the selection of a package from a list of packages, data, SMS, call minutes and value added services from the corresponding lists, as well as the selection to add campaign services or offers.
338) In response to the selections, a summary showing the selected package and services is shown via the user interface.
339) The selection to go forward to payment menus is received from the user interface.

The fourth example starts from step 341 and shows how the user can be allowed to pay her/his subscription using Prepaid scratch card.
341) The user has progressed in the menu to the payment options screen and a selection relating to scratch card from options list of scratch card, buddy share (mobile wallet money transfer between friends or family), credit card and/or debit card is received from the user interface.
342) Scratch card number is received from the user interface and a selection not to recharge with more cards.
343) A welcome screen from the operator is sent to the user interface.

The fifth example starts from step 351 and shows how the user can be allowed to pay her/his subscription using Prepaid buddy share.
351) The user progressed in the menu to the prepaid payment options screen and a selection of buddy share from options list of scratch card, buddy share, credit card and/or debit card is received from the user interface. A screen instructing to go to buddy share retailer and charge the account is sent to the user interface.

The sixth example starts from step 361 and shows how the user can be allowed to pay his subscription using Prepaid debit card.
361) The user has progressed in the menu to the prepaid payment options screen and a selection of debit card from options list of scratch card, buddy share, credit card and/or debit card is received from the user interface. A welcome screen from the operator is sent to the user interface.

The seventh example starts from step 171 and shows how the user can be allowed to pay his subscription using Postpaid debit card.
371) The user has progressed in the menu to the Postpaid payment options screen and a selection related to debit card from options list of debit card and credit card is received from the user interface. A welcome screen from the operator is sent to the user interface.

The eighth example starts from step 381 and shows how the user can be allowed to pay his subscription using Postpaid credit card.
381) The user has progressed in the menu to the Postpaid payment options screen and the selection of credit card from options list of debit card and credit card is received from the user interface. A welcome screen from the operator is sent to the user interface.

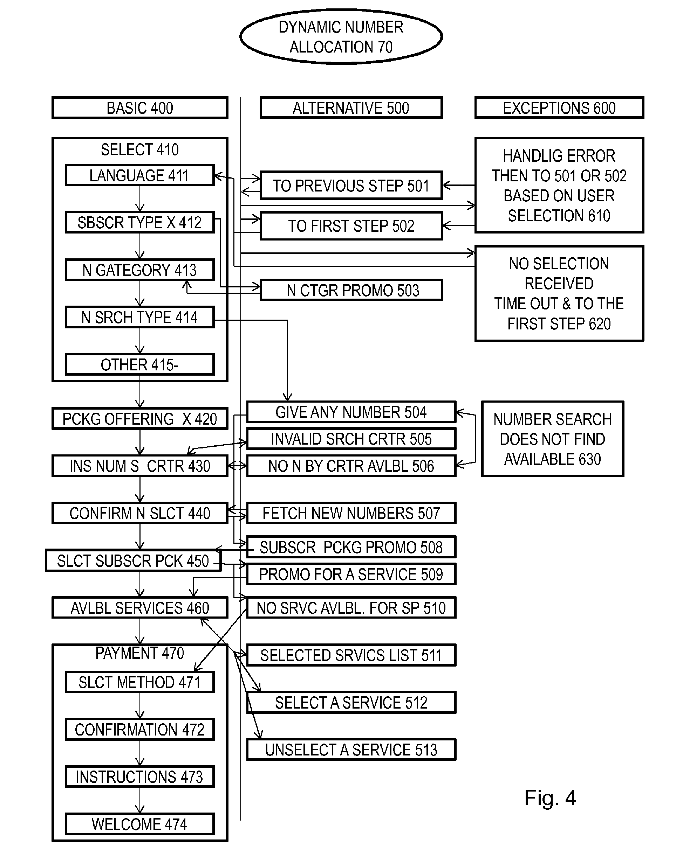

Operational logic according to Fig. 4 for dynamic number allocation 70 is part of internal logic of the activation gateway 11, which is presented in Fig. 1.

The activation gateway 11 includes the basic operation line 400, alternative operation line 500 and exceptions line 600.

Basic operation line 400 include selection operations set 410, package offering operation 420, insert number selection criterion / criteria operation 430, confirm number selection operation 440, select subscriber package operation 450, available services operation 460 and payment operations set 470. The selection operations set includes language selection 411, subscriber type selection 412, number gateway selection 413, number search type selection 414 and other possible selections 415. Payment operations set 470 includes payment method selection 471, payment confirmation 472, payment instructions 473, customer welcoming message provision and other possible payment related operations 474.

Alternative operations line 500 includes an element directing the process to previous step 501, an element directing the process to the first step 502, an element providing number category 503, an element for giving any number 504, an element for informing about invalid search criterion / criteria 505, an element for informing that no number by received search criterion / criteria is available 506, an element for fetching new numbers 507, an element for subscriber package promotion 508, an element for promotion for a service 509, and an element for the case where no service is available based on the selected package 510, an element for providing selected services list 511, an element for selecting a service 512, and an element for unselecting a service 513.

Exceptions line 600 includes at least three most relevant exceptions: handling error exception 610, no selection received, time out, exception 620 and number search does not find an available exception.

Basic operation line 400 has means for basic operations in dynamic number allocation. It inputs from the user end 20, 40, alternative operation line 500, and exceptions operation line 600. It outputs to the user end 20, 40, alternative operation line 500, and exceptions operation line 600. Basic operation line 400 can output to the HLR 30 and input from the HLR 30.

Each element of the basic operations line 400 can input from the user end 20, 40 and output to the user end 20, 40 presented in Fig. 1.

Selection operations set 410 has means for offering different selections to the user end 20, 40 and means for receiving choices from the user end 20, 40 related to items in the offered selections. It also inputs from number category promotion 503, and no selection received, time out, exception 620 and also outputs to package offering x 420, number category promotion 503, and to give any number 504 elements.

Package offering operation 420 has means for offering service package(s) for the user end 20, 40. It inputs from selection operations set 410. It outputs to insert number selection criterion / criteria 430.

Insert number selection criterion / criteria operation 430 has means for offering for the user end a tool to feed criterion or criteria about the requirements or wishes for the MSISDN number to be assigned for the SIM 20. It inputs from package offering x 420, and from invalid search criterion / criteria 505, and from no number by criterion available 506. It outputs to confirm number selection 440, invalid search criterion /criteria 505, and to no number by criterion / criteria available 506 elements.

Confirm number selection operation 440 has means for receiving confirmation about the selected MSISDN number for the SIM 20 to and from the user end 20, 40. It inputs from insert number search criterion / criteria 430, and from fetch new numbers 507. It outputs to select subscription package 450, and to fetch new numbers 507 elements.

Select subscription package operation 450 has means for providing options about subscription package to the user end 20, 40 and receiving choices related to those selections from the user end 20, 40. It inputs from confirm number selection 440, and from subscription package promotion 508. It outputs to available services 460, and to promotion for a service 509 elements.

Available services operation 460 has means for presenting available services to the user end 20, 40. It inputs from select subscription package 450, promotion for a service 509, list of selected services 511, select a service 512, and from unselect a service element 513. It outputs to payment operations set 470, selected services list 511, select a service 512, and unselect a service 513 elements.

Payment operations set 470 has means for running payment operations for the SIM 20. It inputs from available services 460, and from no service available for subscription package 510 elements.

Selection operation set includes language selection 411. It has means for offering a selection of available user languages to the user end 20,40 and means for receiving choice(s) related to the offered selection from the user end 20,40. It inputs from to first step 502, and no selection received time out 620 elements. It outputs to subscription type selection 412 element.

Subscription type selection 412 has means for offering a selection of available user languages to the user end 20, 40 and means for receiving choice(s) related to the offered selection from the user end. It inputs from language selection 411 and it outputs to number category 413, and to number category promotion 503 elements.

Number category selection 413 has means for offering selection of available number categories to the user end 20, 40 and means for receiving choice(s) related to the offered selection from the user end. It inputs from language selection 411 and it outputs to number category promotion 503 elements.

Number search type selection 414 has means for offering selection of available number search types to the user end 20, 40 and means for receiving choice(s) related to the offered selection from the user end. It inputs from number category 413 and outputs to number search type 415 and give any number 504 elements.

Other possible selections 415 has means for providing other possible selections to the user end 20, 40 and means for receiving choices related to those selections from the user end 20, 40. It inputs from number search type 414 and outputs to package offering x 420 elements.

Payment method selection 471 has means for offering selection of payment methods to the user end 20, 40 and means for receiving choice of payment method from the user end 20, 40. It inputs from available services 460 and no service available for subscription package 510 elements. It outputs to payment confirmation element 472.

Payment confirmation 472 has means for offering a slot to receive payment confirmation from the user end 20, 40 and means for informing about confirmed payment to the user end 20, 40. It inputs from select payment method 471. It outputs to select payment instructions 473.

Payment instructions 473 element has means for providing payment instructions 473 to the user end 20, 40. It inputs from payment confirmation 472 and outputs to provide welcome screen 474 elements.

Customer welcoming message provision and other possible payment related operations 474 element has means for providing a welcome message to the user end 20, 40. It inputs from payment instructions 473.

Alternative operations line 500 inputs from the basic operation line 400, and exceptions operation line 600. It outputs to the alternative operation line 500, and exceptions operation line 600. Alternative operations line 500 can input from the HLR 30 and output to the HLR 30.

Each element of the alternative operations line 500 can input from the user end 20, 40 and output to the user end 20, 40 presented in Fig. 1.

An element directing the process to previous step 501 has means for transferring the processing to a previous step 501. It inputs from the basic operations line 400 in general and from handing error exception 610, and outputs to basic operations line 400 in general.

An element directing the process to the first step 502 has means for transferring the processing to the first step. It inputs from the basic operations line 400 in general, and from handling error exception 610. It outputs to language selection element 411.

An element promoting number category 503 has means for promoting number category. It inputs from select subscription type x 412 and it outputs to select number category 413 elements.

An element for giving any number 504 has means for outputting an available MSISDN number for SIM 20. It inputs from number search type 414, no number by criterion /criteria available 506, and number search does not find available 630 elements. It outputs to no number by criterion / criteria available 506, subscription package promotion 508 and number search does not find available 630 elements.

An element for informing about invalid search criterion / criteria 505 has means for informing about invalid search criterion / criteria. It inputs from insert number search (or selection) criterion 430 and number search does not find available 630 elements. It outputs to insert number search (or selection) criterion / criteria 430 and to number search does not find available exception 630 elements.

An element for informing that no number by received search criterion / criteria is available 506 has means for informing that no number by received search criterion /criteria is available. It inputs from 430 insert number search (or selection) criterion /criteria, give any number 504, and number search does not find available 630 elements. It outputs to insert number search (or selection) criterion / criteria 430, give any number 504, and number search does not find available exception 630 elements.

An element for fetching new numbers 507 inputs from confirm number selection 440 and outputs to confirm number selection 440 element.

An element for subscription package promotion 508 has means for subscription package promotion. It inputs from give any number 504 and it outputs to select subscription package 450 elements.

An element for promotion for a service 509 has means for promoting a service. It inputs from select subscription package 450 and it outputs to available services 460 elements.

An element for the case where no service is available based on the selected package 510 inputs from select subscription package 450 and outputs to select payment method 471.

An element for providing selected services list 511 has means for providing selected services list to the user end 20, 40. It inputs from available services 460 and it outputs to available services 460 element.

An element for selecting a service 512 inputs from available services 460 and outputs to available services 460 element.

An element for unselecting a service 513 inputs from available services 460 and outputs to available services 460 element.

Exceptions line 600 inputs from the basic operation line 400, and alternative operation line 600. It outputs to the basic operation line 500, and to the exceptions operation line 600. Exceptions line might input from the HLR 30 and output to the HLR 30.

Each element of the exceptions line 600 can, if so desired, input from the user end 20, 40 and output to the user end 20, 40 presented in Fig. 1.

Exceptions line 600 includes at least three most relevant exceptions: handling error exception 610, no selection received, time out, exception 620 and number search does not find available exception 630.

Handling error exception 610 inputs from the basic operations line 400 in general when there is a handling error. It outputs to 501 to start exception handling.

No selection received, time out, exception 620, inputs from the basic operations line 400 in general. It outputs to 411 to start exception handling.

Number search does not find an available exception 630 has means for informing that number search does not find available MSISDN number by given criterion/criteria. It inputs from and outputs to give any number 504, invalid search criterion / criteria 505, and no number by criterion / criteria available 506.

Having described certain embodiments of the invention, it will now become apparent to one of skill in the art that other embodiments incorporating the concepts of the invention can be used. Therefore, the invention should not be limited to certain embodiments, but rather should be limited only by scope of the following claims.

## Claims

1. A method of activating a SIM (20) on a mobile communications network, the method comprising:
providing (101) the SIM (20) with an activation applet (21) and an IMSI (22) stored in a memory of the SIM (20);
storing (102) the IMSI (22) in a HLR (30);
providing (103) a user of a mobile terminal (40) with the SIM (20);
when the SIM (20) is, before completed execution of the activation applet (21), connected to the mobile communications network (10):
the activation applet (21) communicating (104) with an activation gateway (11);
the activation gateway (11) responsively allocating a temporary MSISDN (31) to the SIM and sending instructions to the HLR (30) for storing the temporary MSISDN (31) in the HLR (30), wherein the temporary MSISDN (31) is logically connected to the IMSI (22);
the activation applet (21) further communicating (104) with the activation gateway (11) and receiving a list of selectable alternatives with regard to at least one selectable parameter, the at least one selectable parameter including at least one of a MSISDN and a service package, each of the service packages defining a respective list of services the user of the service package has access to;
the activation applet (21) obtaining (105) a user selection from the user of the mobile terminal (40), the user selection selecting at least one of the selectable alternatives with respect to at least one of the selectable parameters;
the activation applet (21) communicating (106) the obtained user selection to the activation gateway;
when the user selection contains the selection of a MSISDN, the activation gateway (11) sending (107) instructions to the HLR (30) for recording the selected MSISDN in place of the temporary MSISDN; and
when the user selection contains the selection of a service package, the activation gateway (11) sending (107) instructions to the HLR (30) and the SIM (20) for recording the list of services associated with the selected service package respectively in the HLR (30) and in the SIM (20).

2. The method of claim 1, wherein the connecting the SIM (20) to the mobile communications network (10) comprises authenticating and authorizing the SIM with the HLR before said communication (104) between the activation applet (21) and the activation gateway (11).

3. The method of claim 2, wherein said authorizing of the SIM is performed according to the GSM standard.

4. The method according to any one of claims 1-3, wherein the activation applet (21) communicates (104) with the activation gateway (11) by means of USSD requests and/or SMS messages.

5. The method according to any one of claims 1-4, wherein the IMSI (22) is remained during the activation process such that the IMSI (22) originally stored in the memory of the SIM (20) is the same IMSI (22) that appears recorded for the same SIM (20) in the HLR (30) after the completion of the activation process.

6. The method according to any one of claims 1-5, further comprising disabling the activation applet (21) after completion of the activation process.

7. The method according to any one of claims 1-6, wherein the at least one selectable parameter further includes the language (311, 321, 331) and the list of selectable alternatives includes the languages that are available for selection.

8. The method according to any one of claims 1-7, wherein the at least one selectable parameter further includes the subscription type and the list of selectable alternatives includes prepaid and postpaid.

9. The method according to any one of claims 1-8, wherein the at least one selectable parameter includes the service package and the list of selectable alternatives includes the service packages that are available for selection, the service packages including definitions at least with respect to the SMS services and call connection services.

10. The method according to any one of claims 1-9, wherein the at least one selectable parameter includes the MSISDN and the list of selectable alternatives includes a plurality of different MSISDNs available for selection as the MSISDN to be recorded in place of the temporary MSISDN in the HLR (30).

11. The method according to any one of claims 1-10, further comprising:
responsive to the allocation of the temporary MSISDN (31), the activation gateway (11) communicating the temporary MSISDN (31) to the activation applet (21);
the activation applet (21) instructing the SIM (20) to record the temporary MSISDN in the memory of the SIM (20); and
after the selection of the MSISDN (31), storing the selected MSISDN in place of the temporary MSISDN in the memory of the SIM (20).

12. An activation gateway (11) for activating a SIM (20) on a mobile communications network, the activation gateway (11) configured to perform the steps of:
receiving communication (104) from an activation applet (21) to notify the activation gateway (11) of the execution of the activation applet (21) with regard to a SIM (20) having an IMSI (22);
responsive to the received notification, allocating a temporary MSISDN (31) to the SIM and sending instructions to a HLR (30) for storing the temporary MSISDN (31) logically connected to the IMSI (22);
constructing a list of selectable alternatives with regard to at least one selectable parameter, the at least one selectable parameter including at least one of a MSISDN and a service package, each of the service packages defining a respective list of services the user of the service package has access to;
communicating the list of selectable alternatives to the activation applet (21);
receiving, from the activation applet (21), a user selection selecting at least one of the selectable alternatives with respect to at least one of the selectable parameters;
when the user selection contains the selection of a MSISDN, sending (107) instructions to the HLR (30) for recording the selected MSISDN in place of the temporary MSISDN; and
when the user selection contains the selection of a service package, sending (107) instructions to the HLR (30) and the SIM (20) for recording the list of services associated with the selected service package respectively in the HLR (30) and in the SIM (20).

13. An activation applet (21) for activating a SIM (20) on a mobile communications network, the SIM (20) having an IMSI (22) stored therein, the activation applet (21) configured to be executed on a mobile wireless device with the SIM (20) and having program code instructing the mobile wireless device to perform the steps of
communicating (104) with an activation gateway (11) to notify the activation gateway (11) of the execution of the activation applet (21) with regard to the SIM (20) having the IMSI (22);
communicating (104) with the activation gateway (11) to receive a list of selectable alternatives with regard to at least one selectable parameter, the at least one selectable parameter including at least one of a MSISDN and a service package, each of the service packages defining a respective list of services the user of the service package has access to;
obtaining (105) a user selection from the user of the mobile terminal (40), the user selection selecting at least one of the selectable alternatives with respect to at least one of the selectable parameters;
communicating (106) the obtained user selection to the activation gateway; and receiving confirmation from the activation gateway and storing the confirmed parameters in the memory of the SIM (20).

14. A SIM (20) for a terminal device (40) for a mobile communications network (10), the SIM (20) comprising an IMSI (22) and the activation applet (21) according to claim 13 stored in a memory of the SIM (20).
